# EUROPÄISCHE PATENTSCHRIFT

(11) **EP 1 206 967 B1**
(45) Veröffentlichungstag und Bekanntmachung des Hinweises auf die Patenterteilung: **29.08.2007**
(21) Anmeldenummer: 01125826.6
(22) Anmeldetag: 30.10.2001
(51) Int. Cl.: B01L 3/02, G01N 35/10

(54) **Vorrichtung und Verfahren zur Aufnahme und/oder Abgabe von Flüssigkeitsproben**
System and method for taking up and/or dispensing liquid samples
Système et méthode pour prélever et/ou distribuer des échantillons liquides

(30) Priorität: 17.11.2000 CH 22522000
(43) Veröffentlichungstag der Anmeldung: 22.05.2002
(73) Patentinhaber: Tecan Trading AG, 8708 Männedorf (CH)
(72) Erfinder: Sickinger, Anselm, 04329 Leipzig (DE); Romer, Hanspeter, 8633 Wolfhausen (CH); Ingenhoven, Nikolaus, 8713 Uerikon (CH); Knecht, Urs, 8634 Hombrechtikon (CH)
(74) Vertreter: OK pat AG

(56) Entgegenhaltungen:
- EP-A- 0 725 267
- WO-A-99/42804
- DE-A- 19 919 135
- US-A- 5 763 278
- US-A- 5 916 524
- US-A- 5 927 547
- US-A- 6 063 339

## Beschreibung

Die Erfindung betrifft - gemäss dem Oberbegriff des unabhängigen Anspruchs 1 - eine Verfahren zur Synchronisation eines Systems zur Aufnahme und/oder Abgabe von Flüssigkeitsproben, das eine Mikroejektionsvorrichtung und eine Pumpe umfasst, welche über eine Flüssigkeitsleitung miteinander verbunden sind, wobei dieser Rechner zum Laden eines aktivierbaren Computerprogrammprodukts zur Synchronisation von Mikroejektionsvorrichtung und Pumpe ausgebildet ist. Die Erfindung betrifft zudem ein entsprechendes Computerprogrammprodukt.

Es ist bekannt, dass Tropfen mit einem Volumen von mehr als 10 µl sehr einfach aus der Luft abgegeben werden können, weil die Tropfen bei korrektem Umgang mit der Pipette von selbst die Pipettenspitze verlassen. Die Tropfengrösse wird dann durch die physikalischen Eigenschaften der Probenflüssigkeit, wie Oberflächenspannung oder Viskosität bestimmt. Die Tropfengrösse limitiert somit die Auflösung der abzugebenden Menge Flüssigkeit.

Die Aufnahme und Abgabe, d.h. das Pipettieren von Flüssigkeitsproben mit einem Volumen von weniger als 10 µl verlangt dagegen meist Instrumente und Techniken, welche die Abgabe solch kleiner Proben garantieren. Das Abgeben einer Flüssigkeit mit einer Pipettenspitze, d.h. mit dem Endstück einer Vorrichtung zur Aufnahme und/oder Abgabe von Flüssigkeitsproben kann aus der Luft ("from Air") oder über das Berühren einer Oberfläche geschehen. Diese Oberfläche kann die feste Oberfläche eines Gefässes ("on Tip Touch") sein, in welches die Flüssigkeitsprobe abgegeben werden soll. Es kann auch die Oberfläche einer sich in diesem Gefäss befindlichen Flüssigkeit ("on Liquid Surface") sein. Ein an das Dispensieren anschliessender Mischvorgang ist - besonders bei sehr kleinen Probenvolumina im Nano- oder gar Picoliter-Bereich - zu empfehlen, damit eine gleichmässige Verteilung des Probenvolumens in einem Diluent gewährleistet ist.

Wegwerfspitzen reduzieren wesentlich die Gefahr eines ungewollten Übertragens von Probenteilen (Kontamination). Bekannt sind einfache Wegwerfspitzen (sogenannte "Air-Displacement Tips"), deren Geometrie und Material für das genaue Aufnehmen und/oder Abgeben von sehr kleinen Volumina optimiert ist. Die Verwendung von sogenannten "Positive- Displacement Tips", welche an ihrer Innenseite einen Pumpkolben aufweisen, ist ebenfalls bekannt.

Systeme zum Abtrennen von Proben aus einer Flüssigkeit sind als Pipettierautomaten bekannt. Solche Systeme dienen z.B. zur Abgabe von Flüssigkeiten in die Aufnahmetöpfchen von Standard-Mikrotiterplatten^{™} (Handelsmarke von Beckman Coulter, Inc., 4300 N. Harbour Blvd., P.O.Box 3100 Fullerton, CA, USA 92834) bzw. Mikroplatten mit 96 Töpfchen. Die Reduktion der Probenvolumina (z.B. zum Befüllen von hochdichten Mikroplatten mit 384, 864, 1536 oder noch mehr Töpfchen) spielt eine zunehmend wichtige Rolle, wobei der Genauigkeit des abgegebenen Probenvolumens grosse Bedeutung zukommt. Die Erhöhung der Probenzahl bedingt meistens auch eine Versuchsminiaturisierung, so dass die Verwendung eines Pipettierautomaten unumgänglich wird und spezielle Anforderungen an die Genauigkeit von Probenvolumen sowie die Zielsicherheit der Bewegungsführung bzw. des Dispenses dieses Pipettierautomaten gestellt werden müssen.

Die Genauigkeit eines Pipettiersystems wird an Hand der Richtigkeit (ACC = Accuracy) und Reproduzierbarkeit (CV = Coefficient of Variation) der abgegebenen Flüssigkeitsproben beurteilt. Der Reproduzierbarkeit kommt dabei eine höhere Bedeutung zu, da systematische Fehler gegebenenfalls mittels geeigneter Korrekturparameter kompensiert werden können. Beim Pipettieren werden zwei grundsätzliche Modi unterschieden: Single Pipetting und Multi Pipetting. Beim Single Pipetting Modus wird eine Flüssigkeitsprobe aspiriert und an einem anderen Ort dispensiert. Beim Multi Pipetting Modus wird einmal ein grösseres Flüssigkeitsvolumen aspiriert und anschliessend in mehreren - meist äquivalenten-Portionen (Aliquots) an einem oder mehreren verschieden Orten z.B. in verschiedene Aufnahmetöpfchen einer Standard-Mikrotiterplatte^{™} dispensiert.

Einfachere Pipettierautomaten, sogenannt "offene Systeme", verbinden das Vorratsgefäss für die zu pipettierende Flüssigkeit mit der Pipettenspitze über eine Leitung, in welche eine Dispenserpumpe zwischengeschaltet werden kann. Dispenserpumpen sind zumeist als Kolben-Pumpen ausgebildet. Zum Aufnehmen (Aspirieren) der Probe wird die Pumpe allein in Betrieb gesetzt, die Pipettenspitze leitet lediglich passiv den Flüssigkeitsstrom weiter. Zum Abgeben bzw. Dispensieren eines Probenvolumens wird dann die Pumpe ausgeschaltet oder überbrückt. Aus EP 0 725 267 ist z.B. eine Pipettenspitze in der Form einer Mikroejektionspumpe bekannt, mit welcher aktiv eine Flüssigkeitsprobe abgetrennt wird. Das Nachliefern der Flüssigkeit geschieht durch den in der Leitung zwischen Vorratsgefäss und Pipettenspitze herrschenden, hydrostatischen Druck. Solche Systeme sind zwar relativ kostengünstig, sie haben aber den Nachteil, dass der hydrostatische Druck in einem grossen Bereich schwanken kann. Das reproduzierbare Abgeben von sehr kleinen Volumina im Nanoliter- oder gar Picoliter-Bereich wird dadurch beeinträchtigt.

Aus US 5,927,547 ist zudem ein gattungsgemässes, "geschlossenes" System gemäss dem Oberbegriff des unabhängigen Anspruchs 1 bekannt. Auch bei diesem System wird zum Aspirieren die Pumpe allein in Betrieb gesetzt, die Pipettenspitze leitet lediglich passiv den Flüssigkeitsstrom weiter. Bei diesem System wird jedoch - zum Erzeugen eines bestimmten Druckes im Leitungssystem zur Pipettenspitze - die Dispenserpumpe zum Abgeben der Flüssigkeit in Betrieb genommen. Zum Abtrennen von Volumina im Pico- bis Nanoliterbereich werden - wie diese auch aus EP 0 725 267 bekannt sind - piezobetriebene Spitzen bzw. Mikroejektionspumpen verwendet, bei denen das Flüssigkeits- oder Probenvolumen aktiv aus der Pipettenspitze herausgeschleudert wird. Der Druck zwischen Dispenserpumpe und Pipettenspitze wird mit einem Sensor überwacht. Der Vorschub der Dispenserpumpe dieses eher teuren und komplexen Systems wird dann über den Drucksensor und eine angeschlossene Recheneinheit geregelt. Somit erfolgt eine Synchronisierung zwischen Mikroejektionspumpe und Dispenserpumpe.

Ebenfalls bekannt ist das Bestimmen des Probenvolumens mit einem in unmittelbarer Nähe der Pipettenspitze oder in der Pipettenspitze selbst angeordneten Ventils, das z.B. als Solenoid oder Piezoventil ausgebildet ist und kurzzeitig geöffnet wird. Hierbei wird mit einem Vordruck im System gearbeitet. Dieses Öffnen ist als einmalige Aktion oder auch in Intervallen bekannt. Für die Abgabe eines definierten Volumens muss der Vordruck sehr genau auf die Flüssigkeitseigenschaften und die atmosphärischen Bedingungen (vor allem auf den Luftdruck) abgestimmt sein. Die Effekte überlagern sich gegenseitig stark, so dass das System bei einem Wechsel der Flüssigkeit bzw. deren Eigenschaften oder der Umgebungsbedingungen neu eingestellt werden muss.

Aufgabe der vorliegenden Erfindung ist es, alternative Vorrichtungen und Verfahren vorzuschlagen, welche zugleich ein kostengünstiges aber hochreproduzierbares Abtrennen von Volumina im Nano- bis Picoliterbereich ermöglichen.

Die Aufgabe wird gemäss einem ersten Aspekt mit einem Verfahren entsprechend den Merkmalen von Anspruch 1 und gemäss einem zweiten Aspekt mit einem Computerprogrammprodukt entsprechend den Merkmalen von Anspruch 12 gelöst. Zusätzliche bzw. weiterführende Merkmale ergeben sich aus den abhängigen Ansprüchen.

Die Erfindung wird nun - an Hand von schematischen Zeichnungen, welche lediglich Ausführungsbeispiele darstellen und den Umfang der Erfindung nicht beschränken sollen - näher erläutert. Dabei zeigen:
- Fig. 1: ein System zur Aufnahme und/oder Abgabe von Flüssigkeitsproben, gemäss einer ersten Ausführungsform;
- Fig. 2: ein System zur Aufnahme und/oder Abgabe von Flüssigkeitsproben, gemäss einer zweiten Ausführungsform;
- Fig. 3: ein System zur Aufnahme und/oder Abgabe von Flüssigkeitsproben, gemäss einer dritten Ausführungsform;
- Fig. 4: ein System zur Aufnahme und/oder Abgabe von Flüssigkeitsproben, gemäss einer vierten Ausführungsform.

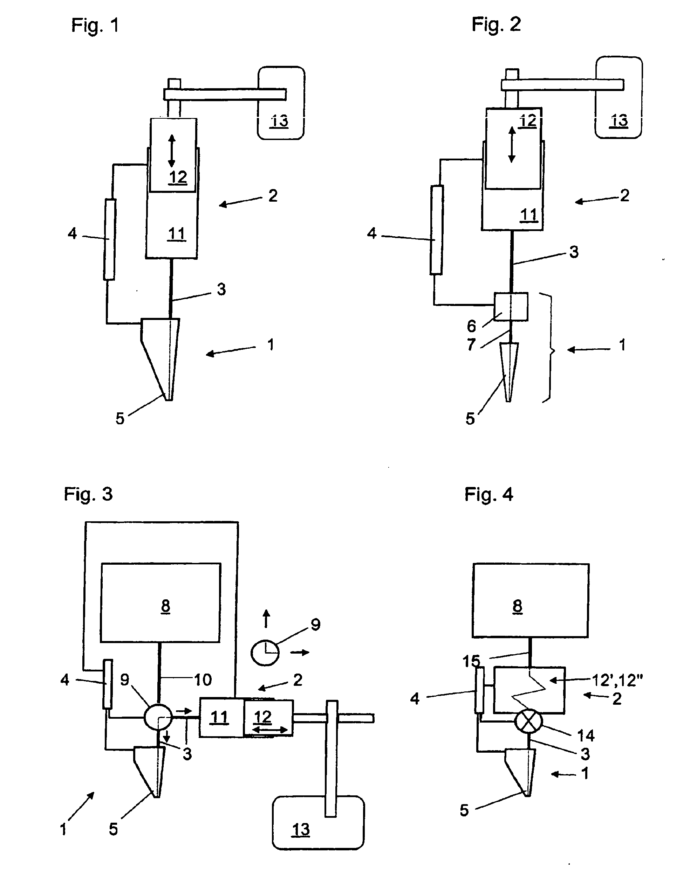

Die Figuren 1 bis 4 zeigen ein System zur Aufnahme und/oder Abgabe von Flüssigkeitsproben. Dieses als Pipettierautomat gestaltete System umfasst eine Mikroejektionsvorrichtung 1 und eine Pumpe 2, welche über eine Flüssigkeitsleitung 3 miteinander verbunden sind. Zudem umfasst das System einen Rechner 4 zum Laden eines aktivierbaren Computerprogrammprodukts. Wenn dieses Computerprogrammprodukt in den Rechner 4 geladen und aktiviert ist, befähigt es diesen Rechner 4 zur Steuerung und Synchronisation folgender Funktionen dieses Systems:
- Aktive Definition eines Probenvolumens und Abgabe dieses definierten Probenvolumens mit der mit Probenflüssigkeit gefüllten Mikroejektionsvorrichtung 1;
- Nachführen eines die Flüssigkeit fördernden Teils 12, 12', 12" der Pumpe 2 um einen von diesem von der Mikroejektionsvorrichtung 1 allein definierten und aktiv abgegebenen, Probenvolumen abhängigen Wert zum Vermeiden von zu hohen Druckunterschieden in Mikroejektionsvorrichtung 1, Flüssigkeitsleitung 3 und Pumpe 2.

Figur 1 zeigt ein System zur Aufnahme und/oder Abgabe von Flüssigkeitsproben, gemäss einer ersten Ausführungsform, in welcher die Mikroejektionsvorrichtung 1 ein als Mikroejektionspumpe ausgebildetes Endstück 5 umfasst. Bevorzugt ist in dieser Ausführungsform eine als Piezo-Mikropumpe ausgebildete Mikroejektionsvorrichtung 1.

Figur 2 zeigt ein System zur Aufnahme und/oder Abgabe von Flüssigkeitsproben, gemäss einer zweiten Ausführungsform, in welcher die Mikroejektionsvorrichtung 1 ein als wegwerfbare Pipettenspitze ausgebildetes Endstück 5, einen Impulsgenerator 6 und eine Endstück 5 und Impulsgenerator 6 verbindende Flüssigkeitsleitung 7 umfasst. Der Impulsgenerator, dessen Funktionsprinzip z.B. aus US 5,763,278 bekannt ist, löst Druckwellen in der Leitung 7 aus, welche ein Austreiben von Flüssigkeitstropfen aus einem - in US 5,763,278 als Nadel ausgebildeten - Endstück 5 bewirken.

Figur 3 zeigt ein System zur Aufnahme und/oder Abgabe von Flüssigkeitsproben, gemäss einer dritten Ausführungsform, in welcher die Mikroejektionsvorrichtung 1 ein als Mikroejektionspumpe ausgebildetes Endstück 5 umfasst. Bevorzugt ist in dieser Ausführungsform eine Mikroejektionsvorrichtung 1 in Form einer Piezo-Mikropumpe. Diese Ausführungsform umfasst zudem ein Vorratsgefäss 8 und/oder ein Dreiweg-Ventil 9, wobei das Dreiweg-Ventil 9 zwischen Pumpe 2 und Vorratsgefäss 8 angeordnet ist. Das Vorratsgefäss 8 und das Dreiweg-Ventil 9 und die Pumpe 2 sind über eine Flüssigkeitsleitung 10 miteinander verbunden. Abweichend von der Darstellung in Fig. 3 kann der Flüssigkeitstransport von der Mikroejektionsvorrichtung 1 in die Pumpe 2 und von der Pumpe 2 in Richtung des Vorratsgefässes 8 über zwei getrennte Ventile (nicht gezeigt) erfolgen.

Den ersten drei Ausführungsformen ist gemeinsam, dass die Pumpe 2 eine Kolbenpumpe ist, welche einen Zylinder 11, einen Kolben 12 und einen Antrieb 13 umfasst. Unter den vielen möglichen Pumpen zum hochpräzisen Aspirieren und Dispensieren von Flüssigkeiten hat sich z.B. ein kommerziell erhältliches Gerät mit dem Namen "CAVRO XP3000 plus Modular Digital Pump" bewährt, welches von der Firma Cavro Scientific Instruments Inc., Sunnyvale, Californien, USA, vertrieben wird.

Figur 4 zeigt ein System zur Aufnahme und/oder Abgabe von Flüssigkeitsproben, gemäss einer vierten Ausführungsform, in welcher die Mikroejektionsvorrichtung 1 ein als Mikroejektionspumpe ausgebildetes Endstück 5 umfasst. Bevorzugt ist in dieser Ausführungsform eine Mikroejektionsvorrichtung 1 in Form einer Mikropumpe und Endstück. Bevorzugte Mikropumpen funktionieren z.B. nach dem Piezoprinzip oder dem Prinzip der thermischen Aktuierung. Diese Ausführungsform umfasst zudem ein Vorratsgefäss 8 und/oder ein Ventil 14, wobei das Ventil 14 zwischen Pumpe 2 und Mikroejektionsvorrichtung 1 angeordnet ist. Das Vorratsgefäss 8 und die Pumpe 2 sind über eine Flüssigkeitsleitung 15 miteinander verbunden. Die Pumpe 2 ist in diesem Fall keine Kolbenpumpe, bei der ein Kolben 12 den die Flüssigkeit fördernden Teil der Pumpe darstellt, sondern eine andere Fördervorrichtung für Flüssigkeiten, die nach dem Durchlaufprinzip arbeitet. Solche Pumpen sind z.B. Quetsch- oder Peristaltikpumpen, welche mittels Rollen 12' eine mit Flüssigkeit gefüllte Leitung 12" deformieren (quetschen) und dadurch einen Flüssigkeitstransport ausführen. Solche Peristaltikpumpen sind aus vielen anderen Laborgeräten zur Lieferung von Flüssigkeiten (wie z.B. in Herz/Lungenmaschinen etc.) bekannt. Solche Pumpen arbeiten meist weniger genau, als es bei der bevorzugten Kolbenpumpe "CAVRO XP3000 plus Modular Digital Pump" der Fall ist.

Alle diese Ausführungsbeispiele umfassen vorzugsweise die Verwendung einer inkompressiblen Systemflüssigkeit zum Weiterleiten der Flüssigkeitsbewegungen in an sich bekannter Art und Weise.

Das erfindungsgemässe Verfahren - auf welchem diese Systeme, aber auch das Computerprogrammprodukt beruhen - ermöglicht prinzipiell das Verwenden von weniger genau arbeitenden und deshalb meist kostengünstigeren Pumpen, wie eine Quetsch- bzw. Peristaltikpumpe. Dieses Verfahren zur Synchronisation eines Systems zur Aufnahme und/oder Abgabe von Flüssigkeitsproben, das eine Mikroejektionsvorrichtung 1 und eine Pumpe 2 umfasst, welche über eine Flüssigkeitsleitung 3 miteinander verbunden sind, wobei dem System ein Rechner 4 zum Laden eines aktivierbaren Computerprogrammprodukts zur Synchronisation von Mikroejektionsvorrichtung 1 und Pumpe 2 zugeordnet ist, kennzeichnet sich dadurch, dass der Rechner 4 auf Grund des aktivierten Computerprogrammprodukts folgende Funktionen des Systems steuert und synchronisiert:
- Aktive Definition eines Probenvolumens und Abgabe dieses definierten Probenvolumens mit der mit Probenflüssigkeit gefüllten Mikroejektionsvorrichtung 1;
- Nachführen eines die Flüssigkeit fördernden Teils 12, 12', 12" der Pumpe 2 um einen von diesem von der Mikroejektionsvorrichtung 1 allein definierten und aktiv abgegebenen, Probenvolumen abhängigen Wert zum Vermeiden von zu hohen Druckunterschieden in Mikroejektionsvorrichtung 1, Flüssigkeitsleitung 3 und Pumpe 2.

Die Abgabe des Probenvolumens erfolgt vorzugsweise in volumendefinierten Teilschritten. Die speziellen geometrischen Dimensionen und physikalischen Eigenschaften der verwendeten Mikroejektionspumpen ermöglichen eine reproduzierbare Abgabe von Flüssigkeitsproben mit einem Volumen von wenigen Nanolitern. Das aktive Verdrängen von Flüssigkeit aus der Mikroejektionsvorrichtung 1 bewirkt einen leichten Unterdruck in der Leitung 3 bzw. 7. Wenn auch ein Teil dieses Unterdruckes möglicherweise durch den Einsatz von flexiblen Leitungen 3,7 kompensiert werden kann, so soll dieser Unterdruck doch einen Maximalwert nicht übertreffen. Die Höhe dieses Maximalwertes richtet sich nach den individuellen Begebenheiten eines entsprechend gebauten Pipettierautomaten. In einem Prototyp des Anmelders wurde dieser Maximalwert mit 100 nl Fehlvolumen definiert.

Das erfinderische Verfahren gleicht dieses Fehlvolumen durch Nachführen des die Flüssigkeit fördernden Teils 12,12',12" der Pumpe 2 zumindest annähernd aus. Dieses Nachführen kann kontinuierlich oder in Teilschritten erfolgen. Bevorzugt wird ein Nachführen in Teilschritten, wobei die Teilschritte für das Nachführen des die Flüssigkeit fördernden Teils 12,12',12" der Pumpe 2 zu Schrittserien zusammen gefasst werden. Eine Schrittserie umfasst dabei immer die gleiche Anzahl Förderschritte, vorzugsweise acht, Teilschritte. Wird eine "CAVRO XP3000 plus Modular Digital Pump" verwendet, so können somit mittels eines als Antrieb 13 verwendeten, hochpräzisen Schrittmotors 3'000 Schritte bzw. 24'000 Teilschritte vollzogen werden. Acht dieser Teilschritte werden vorzugsweise in einem Schritt zusammengefasst, so dass nur ein ganzzahliges Vielfaches von 8 Teilschritten abgearbeitet werden soll. Die Abgabezeit eines bestimmten Probenvolumens ergibt sich aus dem Einzeltropfenvolumen und der Abgabefrequenz der Mikroejektionsvorrichtung 1. Der erfindungsgemässe Rechner steuert nun das Nachführen des die Flüssigkeit fördernden Teils 12,12',12" der Pumpe 2 so, dass es gleichmässig über die gesamte Abgabezeit erfolgt. Das Verdrängungsvolumen (ein Hub) einer solchen Pumpe beträgt vorzugsweise 50 bis 500 µl. Daraus resultieren bei einem Verdrängungsvolumen von z.B. 50 µl im Zylinder 11 einer Pumpe 2 Volumina von 2.1 nl pro Teilschritt bzw. 16.7 nl pro Schritt. Bei einem Verdrängungsvolumen von 500 µl sind die Volumina um einen Faktor 10 grösser.

Der Beginn des Nachführens des die Flüssigkeit fördernden Teils der Pumpe kann zeitverschoben zum Beginn der Abgabe des Probenvolumens erfolgen: Beginnt das Nachführen etwas vor dem Beginn der Abgabe, so wird ein Überdruck in der Leitung 3 bzw. 7 aufgebaut, was für das Abtrennen von höherviskosen Flüssigkeiten, wie Dimethylsulfoxid (DMSO) von Vorteil ist. Beginnt das Nachführen etwas nach dem Beginn der Abgabe, so wird ein Unterdruck in der Leitung 3 bzw. 7 aufgebaut, was für das Abtrennen von sehr niedrigviskosen Flüssigkeiten, wie z.B. Aceton, von Vorteil ist.

Das Ende des Nachführens des die Flüssigkeit fördernden Teils der Pumpe kann zeitverschoben zum Ende der Abgabe des Probenvolumens erfolgen: Endet das Nachführen etwas vor dem Ende der Abgabe, so resultiert am Schluss der Abgabe ein Unterdruck in der Leitung 3 bzw. 7, was ein Nachtropfen von sehr niedrigviskosen Flüssigkeiten erfolgreich verhindert. Endet das Nachführen etwas nach dem Ende der Abgabe, so wird ein Überdruck in der Leitung 3 bzw. 7 aufgebaut, was für das nachfolgende Abtrennen von höherviskosen Flüssigkeiten, wie z.B. DMSO, von Vorteil ist.

Nur schon durch die zeitliche Variation der Ansteuerung von Mikroejektionsvorrichtung 1 und Pumpe 2 kann das System individuell an die zu pipettierende bzw. an die zu dispensierende Flüssigkeit angepasst werden. Falls bei Flüssigkeiten mit kleiner oder gleicher Viskosität wie Wasser durch die Abgabe des Probenvolumens und das Nachführen des die Flüssigkeit fördernden Teils der Pumpe in Teilschritten, ein Restvolumen entsteht, so hat es sich bewährt; dass Abgabe und Nachführen so aufeinander abgestimmt werden, dass dieses Restvolumen immer zu Lasten des Nachführens des die Flüssigkeit fördernden Teils der Pumpe geht, dass also immer ein kleiner Unterdruck zwischen Pumpe 2 und Mikroejektionsvorrichtung 1 erzeugt wird. Dieses Restvolumen wurde in der Praxis an einem Pipettierautomaten bestimmt und soll kleiner sein als 100 nl. Damit Restvolumina in grösseren Serien von abgegeben Proben sich nicht summieren und möglicherweise die Funktion bzw. die Reproduzierbarkeit eines Pipettier- oder Dispensierautomaten beeinträchtigen können, wird ein dem Restvolumen entsprechender Wert vorzugsweise im Rechner 4 gespeichert und in eine folgende Abgabe von Proben eingerechnet.

Die Erfindung ist geeignet, um in einem entsprechenden System zu, wie einem Pipettier- und/oder Dispensierautomaten ausgeführt werden. Ein solcher Automat kann einen oder mehrere individuell ansteuerbare Kanäle mit je einem Endstück 5 aufweisen. Die Endstücke 5 bzw. die Pipettenspitzen können sowohl in einem zweidimensionalen als auch in einem dreidimensionalen Array angeordnet sein.

Allen Ausführungsformen ist gemeinsam, dass der Rechner 4 als elektronisches Bauteil in das System eingebaut ist. Allerdings könnte der Rechner auch Teil eines externen Computers sein, welche dem System beigestellt wird. Ein eingebauter Rechner hat aber den Vorteil, dass er sehr kompakt - z.B. als eine einzige, mit mikroelektronischen Elementen bestückte Platine im Gehäuse eines Pipettierautomaten oder auch einer darin eingebauten Pumpe - ausgebildet sein kann. Bevorzugt ist der Rechner, egal ob er im System integriert oder dem System beigestellt ist, extern ansprechbar und auslesbar, damit z.B. auch automatische Protokolle über die aufgenommenen bzw. abgegebenen Flüssigkeitsproben erstellt werden können.

Das erfindungsgemässe Computerprogrammprodukt zur Synchronisation eines solchen, wie oben beschriebenen Systems zur Aufnahme und/oder Abgabe von Flüssigkeitsproben kann in einen Rechner 4, der dem System beigestellt werden kann oder der in dieses System bereits integriert ist, geladen und dort aktiviert werden. Es ist zudem auf jedem gebräuchlichen Datenträger für elektronische Anlagen zur Datenverarbeitung, wie z.B. einem Hartplattenspeicher, einer "Floppy Disc", einer "Compact Disc" (CD), einer "Digital Versatile Disc" (DVD), aber auch in einem "Read Only Memory" (ROM) einem "Random Access Memory" (RAM) und dergleichen speicher- und von dort abrufbar. Das erfindungsgemässe Computerprogrammprodukt ist fähig mit anderen Programmen bzw. Computern zu kommunizieren. Es kann auch Befehle zur Steuerung eines Dreiweg-Ventils 9, welches der Pumpe 2 vorgeschaltet ist, bzw. Befehle zur Steuerung der Pumpe 2 für die Aspiration einer Flüssigkeit umfassen.

Das erfindungsgemässe Computerprogrammprodukt dient somit zur Befähigung eines Computers bzw. Rechners 4 zur Synchronisation eines Systems zur Aufnahme und/oder Abgabe von Flüssigkeitsproben, wobei das System eine Mikroejektionsvorrichtung 1 und eine Pumpe 2 umfasst, welche über eine Flüssigkeitsleitung 3 miteinander verbunden sind - ungeachtet der Tatsache, ob der Rechner 4 zu diesem Zweck dem System nur beigestellt oder darin integriert ist. Dabei kann dieses Computerprogrammprodukt bereits in den Rechner geladen bzw. in einem Speicher des Rechners installiert sein. In seinem aktivierten Zustand befähigt das Computerprogrammprodukt den Rechner 4 folgende Funktionen des Systems zu steuern und zu synchronisieren:
- Aktive Definition eines Probenvolumens und Abgabe dieses definierten Probenvolumens mit der mit Probenflüssigkeit gefüllten Mikroejektionsvorrichtung 1;
- Nachführen eines die Flüssigkeit fördernden Teils 12, 12', 12" der Pumpe 2 um einen von diesem von der Mikroejektionsvorrichtung 1 allein definierten und aktiv abgegebenen, Probenvolumen abhängigen Wert zum Vermeiden von zu hohen Druckunterschieden in Mikroejektionsvorrichtung 1, Flüssigkeitsleitung 3 und Pumpe 2.

Das Funktionieren erfindungsgemässer Verfahren kann mit drei unabhängigen Methoden wie folgt belegt werden.

### A Optische Messungen:

Mittels einer Hochgeschwindigkeitskamera (High Speed Camera) konnten die einzelnen Tropfen, die mit einer Mikroejektionsvorrichtung 1 abgegeben wurden, direkt vermessen werden. Mit einer Anordnung gemäss Fig. 1 wurde Flüssigkeit aspiriert und im Multi Pipetting Modus dispensiert. Es wurden 43 Aliquote zu 25 nl (= 1075 nl totales Dispensvolumen) abgegeben, wobei jedes Aliquot aus 48 Einzeltropfen bestand. Jeder Einzeltropfen wurde individuell vermessen.

| Sollvolumen | Durchschnittsvolumina der 43 Aliquote | ACC der Aliquote | CV der Aliquote |
|---|---|---|---|
| 25 nl | 26.5 nl | 5.9% | 1.91% |

| Durchschnittsvolumina aller Einzeltropfen (n=2064) | CV über alle Einzeltropfen (n=2064) |
|---|---|
| 551.6 pl | 2.9 % |

### B Gravimetrische Messungen:

Mit einer Anordnung gemäss Fig. 1 wurde Flüssigkeit aspiriert und im Multi Pipetting Modus (12 Aliquote) dispensiert. Die Volumina wurden mit einer Mettler UMT2 Waage (Messbereich 0.1 µg bis 2.1 g) bestimmt. Es wurde 90 %iges Dimethylsulfoxid pipettiert. Es wurden 100, 500 bzw. 1000 Einzeltropfen (Solltropfenvolumen = 400 pl) abgegeben. Für die Auswertung wurde eine Dichte von 1.09 g/ml zu Grunde gelegt.

| Multi Pipetting Modus | | | |
|---|---|---|---|
| Sollvolumen | Durchschnittsvolumina der 12 Aliquote | ACC der Aliquote | CV der Aliquote |
| 40 nl | 40.7 nl | 1.8% | 1.9 % |
| 80 nl | 82.0 nl | 2.5% | 2.3 % |
| 400 nl | 409.4 nl | 2.3% | 1.1 % |

### C Photometrische Messungen:

Mit einer Anordnung gemäss Fig. 1 wurde Flüssigkeit sowohl im Single Pipetting Modus (je 12 Einzelpipettierungen) als auch im Multi Pipetting Modus (12 Aliquote) pipettiert. Es wurden 20, 100, 200 bzw. 1000 Einzeltropfen (Solltropfenvolumen = 500 pl) abgegeben.

Für die Eichkurve wurde eine wässrige 0.25 M FeSO₄-Lösung mit FerroZine^{®} angesetzt. "FerroZine^{®} " ist das eingetragene Warenzeichen von Hach Company, P.O. Box 389, Loveland, CO 80539 USA. Die entstandene Komplexlösung wurde mit Ascorbinsäure stabilisiert. Aus dieser Stammlösung wurden durch Verdünnen Messlösungen hergestellt, die Pipettiervolumina von 2.5 nl, 5.0 nl, 10.0 nl, 20.0 nl, 40.0 nl und 80.0 nl in 200 µl entsprechen. Jeweils 12 Aliquote zu 200 µl dieser Messlösungen wurden von Hand in eine Mikroplatte pipettiert und die optische Absorption bzw. die Optical Densities (OD) mit einem Mikroplatten-Photometrie-Reader gemessen. Durch die Messpunkte konnte mittels Linearer Regression die Eichkurve errechnet werden.

Für die Volumenbestimmungen wurden jeweils 100 µl einer mit Ammoniumacetat gepufferten 3.25 mM FerroZine^{®} -Lösung mit Ascorbinsäure in den Aufnahmetöpfchen einer Mikroplatte vorgelegt. Darauf wurden 10 nl und 50 nl einer mit Ascorbinsäure stabilisierten 0.25 M FeSO₄-Lösung mit dem Pipettierautomaten zupipettiert. Die Pipettierungen von 100 nl und 500 nl wurden mit einer mit Ascorbinsäure stabilisierten 0.025 M FeSO₄-Lösung durchgeführt.

Nach dem Pipettiervorgang wurde das Volumen mit demineralisiertem Wasser in den einzelnen Aufnahmetöpfchen auf 200 µl Gesamtvolumen aufgefüllt. Die optische Absorption der gefärbten Komplexlösung in den Aufnahmetöpfchen der Mikroplatte wurde darauf in einem Mikroplatten-Photometrie-Reader gemessen und die Volumina anhand der Eichkurve berechnet.

| Single Pipetting Modus | | | |
|---|---|---|---|
| Sollvolumen | Durchschnittsvolumina der 12 Einzelpipettierungen | ACC | CV |
| 10 nl | 9.7 nl | 3.0% | 2.9 % |
| 50 nl | 48.0 nl | 4.0% | 1.2 % |
| 100 nl | 101.8 nl | 1.8% | 1.5 % |
| 500 nl | 497.5 nl | 0.5% | 1.5 % |

| Multi Pipetting Modus | | | |
|---|---|---|---|
| Sollvolumen | Durchschnittsvolumina der 12 Aliquote | ACC der Aliquote | CV der Aliquote |
| 10 nl | 9.8 nl | 2.0% | 1.4 % |
| 50 nl | 48.1 nl | 3.8% | 2.5 % |
| 100 nl | 99.3 nl | 0.7% | 4.0 % |
| 500 nl | 509.0 nl | 1.8% | 2.8 % |

Die eingangs gestellte Aufgabe, alternative Vorrichtungen und Verfahren vorzuschlagen, welche zugleich ein kostengünstiges aber hochreproduzierbares Abtrennen von Volumina im Nanoliter- bis Picoliter-Bereich ermöglichen, ist somit erfüllt.

## Patentansprüche

1. Verfahren zur Synchronisation eines Systems zur Aufnahme und/oder Abgabe von Flüssigkeitsproben, das eine Mikroejektionsvorrichtung (1) und eine als Kolbenpumpe ausgebildete, einen Zylinder (11), einen Kolben (12) und einen Antrieb (13) umfassende Pumpe (2) umfasst, wobei Mikroejektionsvorrichtung (1) und Pumpe (2) über eine Flüssigkeitsleitung (3) miteinander verbunden sind und wobei dem System ein Rechner (4) zum Laden eines aktivierbaren Computerprogrammprodukts zur Synchronisation von Mikroejektionsvorrichtung (1) und Pumpe (2) zugeordnet ist, **dadurch gekennzeichnet, dass** die Mikroejektionsvorrichtung (1) ein Endstück (5) umfaßt und mit Probenflüssigkeit gefüllt wird und der Rechner (4) auf Grund des aktivierten Computerprogrammprodukts folgende Arbeitsschritte des Systems steuert und synchronisiert:
a) Aktive Definition und Abgabe eines Probenvolumens in einer Vielzahl von volumendefinierten Teilschritten allein mit der mit Probenflüssigkeit gefüllten Mikroejektionsvorrichtung (1), wobei ein maximaler Unterdruck in der Flüssigkeitsleitung (3), welcher ein Fehlvolumen definiert, nicht überschritten werden soll;
b) Zumindest annäherndes Ausgleichen des Fehlvolumens mit dem die Flüssigkeit fördernden Kolben (12) der Pumpe (2) um einen Wert, der von dem in Schritt a) nur mit der Mikroejektionsvorrichtung (1) abgegebenen und definierten Probenvolumen abhängt;
c) falls durch die Abgabe des Probenvolumens und das Ausgleichen des Fehlvolumens mit dem Kolben (12) der Pumpe (2) in Teilschritten, ein Restvolumen entsteht - Abgabe und Ausgleichen des Fehlvolumens so aufeinander abgestimmt werden, dass dieses Restvolumen immer zu Lasten des Ausgleichens des Fehlvolumens mit dem Kolben (12) der Pumpe (2) geht, wobei, ein dem Restvolumen entsprechender Wert im Rechner (4) gespeichert und in eine folgende Abgabe von Proben eingerechnet wird.

2. Verfahren nach Anspruch 1, **dadurch gekennzeichnet, dass** der in a) definierte maximale Unterdruck in der Flüssigkeitsleitung (3) einem Fehlvolumen von 100 nl entspricht, und dass der in b) definierte Wert einem Restvolumen von weniger als 100 nl entspricht.

3. Verfahren nach Anspruch 1 oder 2, **dadurch gekennzeichnet, dass** der Rechner (4) als elektronisches Bauteil in das System eingebaut sowie extern ansprechbar und auslesbar ist.

4. Verfahren nach einem der vorhergehenden Ansprüche, **dadurch gekennzeichnet, dass** die Mikroejektionsvorrichtung (1) ein als Mikroejektionspumpe ausgebildetes Endstück (5) umfasst.

5. Verfahren nach einem der vorhergehenden Ansprüche, **dadurch gekennzeichnet, dass** die Mikroejektionsvorrichtung (1) eine Piezo-Mikropumpe ist.

6. Verfahren nach einem der Ansprüche 1 bis 3, **dadurch gekennzeichnet, dass** die Mikroejektionsvorrichtung (1) ein als wegwerfbare Pipettenspitze ausgebildetes Endstück (5), einen Impulsgenerator (6) sowie eine Endstück (5) und Impulsgenerator (6) verbindende Flüssigkeitsleitung (7) umfasst.

7. Verfahren nach einem der vorhergehenden Ansprüche, **dadurch gekennzeichnet, dass** es zudem ein Vorratsgefäss (8) und/oder ein Dreiweg-Ventil (9) umfasst, wobei das Dreiweg-Ventil (9) zwischen Pumpe (2) und Vorratsgefäss (8) angeordnet ist und wobei Vorratsgefäss (8) und/oder Dreiweg-Ventil (9) und Pumpe (2) über eine Flüssigkeitsleitung (10) miteinander verbunden sind.

8. Verfahren nach einem der vorhergehenden Ansprüche, **dadurch gekennzeichnet, dass** die Flüssigkeitsleitung (3) eine Systemflüssigkeit enthält.

9. Verfahren nach einem der vorhergehenden Ansprüche, **dadurch gekennzeichnet, dass** das Ausgleichen des Fehlvolumens mit dem Kolben (12) der Pumpe (2) kontinuierlich oder in Teilschritten erfolgt.

10. Verfahren nach Anspruch 9, **dadurch gekennzeichnet, dass** die Teilschritte für das Ausgleichen des Fehlvolumens mit dem Kolben (12) der Pumpe (2) zu Schrittserien zusammengefasst werden, wobei eine Schrittserie immer die gleiche Anzahl, vorzugsweise 8, Teilschritte umfasst.

11. Verfahren nach einem der vorhergehenden Ansprüche, **dadurch gekennzeichnet, dass** der Beginn und/oder das Ende des Ausgleichens des Fehlvolumens mit dem Kolben (12) der Pumpe (2) zeitverschoben zum Beginn und/oder zum Ende der Abgabe des Probenvolumens erfolgt.

12. Computerprogrammprodukt zur Synchronisation eines Systems zur Aufnahme und/oder Abgabe von Flüssigkeitsproben, das eine Mikroejektionsvorrichtung (1) und eine als Kolbenpumpe ausgebildete, einen Zylinder (11), einen Kolben (12) und einen Antrieb (13) umfassende Pumpe (2) umfasst, wobei Mikroejektionsvorrichtung (1) und Pumpe (2) über eine Flüssigkeitsleitung (3) miteinander verbunden sind und wobei dem System ein Rechner (4) zum Laden eines aktivierbaren Computerprogrammprodukts zur Synchronisation von Mikroejektionsvorrichtung (1) und Pumpe (2) zuordenbar ist, **dadurch gekennzeichnet, dass** die Mikroejektionsvorrichtung (1) ein Endstück (5) umfasst und mit Probenflüssigkeit gefüllt ist und dieses Computerprogrammprodukt in aktiviertem Zustand den Rechner (4) befähigt, folgende Arbeitsschritte des Systems zu steuern und zu synchronisieren:
a) Aktive Definition und Abgabe eines Probenvolumens bis zum Erreichen eines maximalen Unterdrucks in der Flüssigkeitsleitung (3) in einer Vielzahl von volumendefinierten Teilschritten allein mit der mit Probenflüssigkeit gefüllten Mikroejektionsvorrichtung (1);
b) Zumindest annäherndes Ausgleichen eines Fehlvolumens mit dem die Flüssigkeit fördernden Kolben (12) der Pumpe (2) um einen Wert, der von dem in Schritt a) nur mit der Mikroejektionsvorrichtung (1) abgegebenen und definierten Probenvolumen abhängt;
c) falls durch die Abgabe des Probenvolumens und das Ausgleichen des Fehlvolumens mit dem Kolben (12) der Pumpe (2) in Teilschritten, ein Restvolumen entsteht - Abgabe und Ausgleichen des Fehlvolumens so aufeinander abgestimmt werden, dass dieses Restvolumen immer zu Lasten des Ausgleichens des Fehlvolumens mit dem Kolben (12) der Pumpe (2) geht, wobei, ein dem Restvolumen entsprechender Wert im Rechner (4) gespeichert und in eine folgende Abgabe von Proben eingerechnet wird.

13. Computerprogrammprodukt nach Anspruch 12, **dadurch gekennzeichnet, dass** es auch Befehle zur Steuerung eines Dreiweg-Ventils (9), welches der Pumpe (2) vorgeschaltet ist, umfasst.

14. Computerprogrammprodukt nach Anspruch 12 oder 13, **dadurch gekennzeichnet, dass** es auch Befehle zur Steuerung der Pumpe (2) für die Aspiration einer Flüssigkeit umfasst.

## Claims

1. Method for synchronization of a system for taking up and/or dispensing liquid samples, comprising a micro-ejection device (1) and a pump (2) accomplished as a piston pump comprising a cylinder (11), a piston (12) and a drive (13), the micro-ejection device (1) and pump (2) being connected together by a liquid duct (3) and the system having allocated to it a data processor (4) to be loaded with an activatable computer program product for synchronization of the micro-ejection device (1) and the pump (2), **characterized in that** the micro-ejection device (1) comprises an end piece (5) and is filled with sample liquid and the data processor (4), by reason of the activated computer program product, controls and synchronizes the following operating steps of the system:
a) active definition and dispensing of a sample volume in a plurality of volume-defined partial steps with only the micro-ejection device (1) filled with sample liquid, such that a maximum negative pressure in the liquid duct (3), defining a error volume, should not be exceeded;
b) at least approximate compensation of the error volume by the piston (12) of the pump (2) that propels the liquid by a value depending solely on the sample volume dispensed and defined by the micro-ejection device (1) in step a);
c) in the event that the dispensing of the sample volume and the compensation of the error volume by the piston (12) of the pump (2) in partial steps should yield a remaining volume, dispensing and compensation of the error volume are so defined with respect to each other that this remaining volume is always borne by the compensation of the error volume by the piston (12) of the pump (2), a value corresponding to the remaining volume being stored in the data processor (4) and included in the calculation of samples dispensed subsequently.

2. Method according to Claim 1, **characterized in that** the maximum negative pressure in the liquid duct (3) defined in a) corresponds to a error volume of 100 nl, and the value defined in b) corresponds to a remaining volume of less than 100 nl.

3. Method according to Claim 1 or 2, **characterized in that** the data processor (4) is incorporated in the system as an electronic component and can be addressed and read externally.

4. Method according to any one of the preceding Claims, **characterized in that** the micro-ejection device (1) comprises an end piece (5) accomplished as a micro-ejection pump.

5. Method according to any one of the preceding Claims, **characterized in that** the micro-ejection device (1) is a piezo-micro-pump.

6. Method according to any one of Claims 1 to 3, **characterized in that** the micro-ejection device (1) comprises an end piece (5) accomplished as a disposable pipette tip, a pulse generator (6) and a liquid duct (7) linking the end piece (5) and the pulse generator (6).

7. Method according to any one of the preceding Claims, **characterized in that** it also comprises a storage vessel (8) and/or a three-way valve (9), the three-way valve (9) being arranged between the pump (2) and the storage vessel (8), and the storage vessel (8) and/or the three-way valve (9) and the pump (2) being connected together through a liquid line (10).

8. Method according to any one of the preceding Claims, **characterized in that** the liquid duct (3) contains a system liquid.

9. Method according to any one of the preceding Claims, **characterized in that** compensation of the error volume by the piston (12) of the pump (2) takes place continuously or in partial steps.

10. Method according to Claim 9, **characterized in that** the partial steps for compensation of the error volume by the piston (12) of the pump (2) are grouped into series of steps, one series of steps always comprising the same number of partial steps, preferably 8.

11. Method according to any one of the preceding Claims, **characterized in that** the beginning and/or the end of error volume compensation by the piston (12) of the pump (2) is displaced in time to the beginning and/or the end of dispensing of the sample volume.

12. Computer program product for synchronization of a system for taking up and/or dispensing liquid samples, comprising a micro-ejection device (1) and a pump (2) accomplished as a piston pump comprising a cylinder (11), a piston (12) and a drive (13), wherein the micro-ejection device (1) and pump (2) are connected together by a liquid duct (3), and wherein a data processor (4) to be loaded with an activatable computer program product for synchronization of the micro-ejection device (1) and the pump (2) is able to be allocated to the system, **characterized in that** the micro-ejection device (1) comprises an end piece (5) and is filled with sample liquid and that the computer program product in its activated state enables the data processor (4) to control and synchronize the following operating steps of the system:
a) active definition and dispensing of a sample volume until attainment of a maximum negative pressure in the liquid duct (3), in a plurality of volume-defined partial steps with only the micro-ejection device (1) filled with sample liquid;
b) at least approximate compensation of an error volume by the piston (12) of the pump (2) that propels the liquid by a value depending solely on the sample volume dispensed and defined by the micro-ejection device (1) in step a);
c) in the event that the dispensing of the sample volume and the compensation of the error volume by the piston (12) of the pump (2) in partial steps should yield a remaining volume, dispensing and compensation of the error volume are so defined with respect to each other that this remaining volume is always borne by the compensation of the error volume by the piston (12) of the pump (2), a value corresponding to the remaining volume being stored in the data processor (4) and included in the calculation of samples dispensed subsequently.

13. Computer program product according to Claim 12, **characterized in that** it also comprises commands for the control of a three-way valve (9) arranged upstream of the pump (2).

14. Computer program product according to Claim 12 or 13, **characterized in that** it also comprises commands for the control of the pump (2) for aspirating a liquid.

## Revendications

1. Méthode de synchronisation d'un système de prélèvement et/ou de décharge d'échantillons liquides, qui comprend un dispositif de micro-éjection (1) et une pompe (2) exécutée sous la forme d'une pompe à piston et comprenant un cylindre (11), un piston (12) et un entraînement (13), dans lequel le dispositif de micro-éjection (1) et la pompe (2) sont reliés ensemble par une conduite de liquide (3) et dans lequel est coordonné au système un calculateur (4) permettant de charger un produit de programme informatique qui peut être activé, destiné à synchroniser le dispositif de micro-éjection (1) et la pompe (2), **caractérisé en ce que** le dispositif de micro-éjection (1) comprend un embout (5) et est rempli de liquide échantillon, et **en ce que** le calculateur (4) commande et synchronise, sur la base du produit de programme informatique activé, les étapes de travail suivantes du système :
a) définition active et décharge d'un volume d'échantillon selon un nombre d'étapes partielles définies en volume seulement avec le dispositif de micro-éjection (1) rempli de liquide échantillon, une dépression maximale dans la conduite de liquide (3), qui définit un volume manquant, ne devant alors pas être dépassée ;
b) équilibrage au moins approximatif du volume manquant avec le piston (12) de la pompe (2) qui déplace le liquide, d'une valeur qui dépend du volume d'échantillon déchargé et défini lors de l'étape a) uniquement avec le dispositif de micro-éjection (1) ;
c) dans le cas où, par la décharge du volume d'échantillon et l'équilibrage du volume manquant avec le piston (12) de la pompe (2) selon des étapes partielles, il existe un volume résiduel, décharge et équilibrage du volume manquant sont harmonisés l'un par rapport à l'autre de façon telle que ce volume résiduel est toujours à la charge de l'équilibrage du volume manquant avec le piston (12) de la pompe (2), où une valeur correspondant au volume résiduel est mémorisée dans le calculateur (4) et est incluse dans une décharge suivante d'échantillons.

2. Méthode selon la revendication 1, **caractérisé en ce que** la dépression maximale dans la conduite de liquide (3), définie à l'étape a), correspond à un volume manquant de 100 nl, et **en ce que** la valeur définie à l'étape b) correspond à un volume résiduel inférieur à 100 nl.

3. Méthode selon la revendication 1 ou 2, **caractérisé en ce que** le calculateur (4) est monté dans le système en tant que composant électronique, et peut être déclenché et lu de façon externe.

4. Méthode selon l'une des revendications précédentes, **caractérisé en ce que** le dispositif de micro-éjection (1) comprend un embout (5) conçu sous la forme d'une pompe de micro-éjection.

5. Méthode selon l'une des revendications précédentes, **caractérisé en ce que** le dispositif de micro-éjection (1) est une micro-pompe piézo-électrique.

6. Méthode selon l'une des revendications 1 à 3, **caractérisé en ce que** le dispositif de micro-éjection (1) comprend un embout (5) exécuté sous la forme d'une pointe de pipette jetable, un générateur d'impulsions (6) ainsi qu'une conduite de liquide (7) reliant l'embout (5) et le générateur d'impulsions (6).

7. Méthode selon l'une des revendications précédentes, **caractérisé en ce qu'**il comprend de plus un réservoir de stockage (8) et/ou une soupape à trois voies (9), la soupape à trois voies (9) étant disposée entre la pompe (2) et le réservoir de stockage (8), et le réservoir de stockage (8) et/ou la soupape à trois voies (9) et la pompe (2) étant reliés ensemble par une conduite de liquide (10).

8. Méthode selon l'une des revendications précédentes, **caractérisé en ce que** la conduite de liquide (3) contient un liquide système.

9. Méthode selon l'une des revendications précédentes, **caractérisé en ce que** l'équilibrage du volume manquant avec le piston (12) de la pompe (2) se fait de façon continue ou par étapes partielles.

10. Méthode selon la revendication 9, **caractérisé en ce que** les étapes partielles de l'équilibrage du volume manquant avec le piston (12) de la pompe (2) sont rassemblées en séries d'étapes, une série d'étapes comportant toujours le même nombre d'étapes partielles, de préférence 8.

11. Méthode selon l'une des revendications précédentes, **caractérisé en ce que** le début et/ou la fin de l'équilibrage du volume manquant avec le piston (12) de la pompe (2) se fait de façon décalée dans le temps par rapport au début et/ou à la fin de la décharge du volume d'échantillon.

12. Produit de programme informatique pour la synchronisation d'un système de prélèvement et/ou de décharge d'échantillons liquides qui comprend un dispositif de micro-éjection (1) et une pompe (2) exécutée sous la forme d'une pompe à piston et comportant un cylindre (11), un piston (12) et un entraînement (13), où le dispositif de micro-éjection (1) et la pompe (2) sont reliés ensemble par une conduite de liquide (3), où un calculateur (4), qui permet de charger un produit de programme informatique, pouvant être activé, destiné à synchroniser le dispositif de micro-éjection (1) et la pompe (2), peut être coordonné au système, **caractérisé en ce que** le dispositif de micro-éjection (1) comprend un embout (5) et est rempli de liquide échantillon, et **en ce que** ce produit de programme informatique, à l'état activé, rend le calculateur (4) apte à commander et à synchroniser les étapes de travail suivantes du système :
a) définition active et décharge d'un volume d'échantillon jusqu'à atteindre une dépression maximale dans la conduite de liquide (3), selon un nombre d'étapes partielles définies en volume uniquement avec le dispositif de micro-éjection (1) rempli de liquide échantillon ;
b) équilibrage au moins approximatif d'un volume manquant avec le piston (12) de la pompe (2) qui déplace le liquide, d'une valeur qui dépend du volume déchargé et défini dans l'étape a) uniquement avec le dispositif de micro-éjection (1) ;
c) dans le cas où, par la décharge du volume échantillon et l'équilibrage du volume manquant avec le piston (12) de la pompe (2) selon des étapes partielles, il existe un volume résiduel, décharge et équilibrage du volume manquant sont harmonisés l'un par rapport à l'autre de façon telle que ce volume résiduel est toujours à la charge de l'équilibrage du volume manquant avec le piston (12) de la pompe (2), où une valeur correspondant au volume résiduel est mémorisée dans le calculateur (4) et est incluse dans une décharge suivante d'échantillons.

13. Produit de programme informatique selon la revendication 12, **caractérisé en ce qu'**il comprend aussi des instructions de commande d'une soupape à trois voies (9) qui est intercalée avant la pompe (2).

14. Produit de programme informatique selon la revendication 12 ou 13, **caractérisé en ce qu'**il comprend aussi des instructions de commande de la pompe (2) pour l'aspiration d'un liquide.
